# DEMANDE DE BREVET EUROPEEN

(11) **EP 3 714 696 A2**
(43) Date de publication de la demande: **30.09.2020**
(21) Numéro de dépôt: 20165114.8
(22) Date de dépôt: 24.03.2020
(51) Int. Cl.: A21C 5/00, A21B 5/03

(54) **INSTALLATION POUR LA FABRICATION DE COQUES DE MACARONS**

(30) Priorité: 25.03.2019 FR 1903093
(71) Demandeur: Arpege, 10300 Sainte Savine (FR)
(72) Inventeur: QUEIREL, Joël, GX11 1AA GIBRALTAR (GI); PAULET, Arnaud, 10180 SAINT-LYE (FR); LEGRAND, Jean-Michel, 10190 CHENNEGY (FR)
(74) Mandataire: Hugues, Catherine

(57) **Abrégé**

La présente invention concerne une installation (1) pour la fabrication de coques de macarons comprenant un tapis de convoyage (2) se déplaçant depuis une zone d'entrée de ligne (3) en direction d'une zone de sortie de ligne (4), et traversant une zone de dressage (5) et une zone de cuisson (6) des coques, la zone de dressage (5) étant équipée d'un dispositif de dressage (7) de la pâte comportant une trémie d'alimentation (8) reliée, par des moyens de fractionnement de la pâte, à des moyens de dépôt de fractions de pâte sur le tapis de convoyage (2). Elle est caractérisée en ce que lesdits moyens de fractionnement comportent au moins des premiers et des seconds moyens de fractionnement.

## Description

La présente invention a pour objet une installation pour la fabrication de coques de macarons comprenant un tapis de convoyage se déplaçant depuis une zone d'entrée de ligne en direction d'une zone de sortie de ligne, et traversant une zone de dressage et une zone de cuisson des coques, la zone de dressage étant équipée d'un dispositif de dressage de la pâte comportant une trémie d'alimentation reliée, par des moyens de fractionnement de la pâte, à des moyens de dépôt de fractions de pâte sur le tapis de convoyage.

A l'heure actuelle, différentes solutions pour fabriquer des coques de macarons de manière industrielle ou semi-industrielle, comprenant de tels moyens techniques, sont d'ores et déjà connues. L'une d'entre elles est décrite dans la publication FR 886.750 qui propose un dispositif spécifiquement étudié pour permettre un dosage régulier de la pâte, aussi bien en termes de quantité que de grandeur.

La présente invention a pour objectif de proposer, par rapport aux solutions existantes, une alternative permettant d'élargir la gamme, en termes de taille, des coques de macarons fabriquées de manière industrielle, tout en garantissant une qualité gustative et visuelle irréprochables. En d'autres termes, un but de l'invention est de proposer une solution permettant de fabriquer des coques de macarons de très petites tailles, à savoir moins de 1,5 cm de diamètre, aussi bien que des coques de macarons de tailles standards, ou de très grandes tailles, selon les besoins et les applications envisagées. Les différents moyens techniques prévus dans le cadre de cette solution ont par ailleurs pour but de faciliter le déroulement de l'ensemble des étapes du procédé de fabrication, sans nuire à la qualité des produits obtenus, et ce quelle que soit la taille des coques fabriquées.

A cet effet, la présente invention concerne une installation du genre indiquée en préambule, caractérisée en ce que lesdits moyens de fractionnement comportent au moins des premiers et des seconds moyens de fractionnement.

Conformément à un mode de réalisation préférentiel de l'invention, la trémie d'alimentation peut ainsi être conçue de manière à présenter un fond surmonté par une paroi périphérique, les premiers moyens de fractionnement comportant un nombre n supérieur à 1 d'orifices formés dans ledit fond et communiquant chacun avec l'extrémité d'entrée d'un conduit d'axe perpendiculaire audit fond, tandis que lesdits seconds moyens de fractionnement comportent au moins deux embranchements tubulaires communiquant chacun avec l'extrémité de sortie dudit conduit.

Par ailleurs, les moyens de dépôt de fractions de pâte peuvent quant à eux être définis par au moins un bac, délimité par un fond s'étendant parallèlement au fond de ladite trémie d'alimentation, surmonté par une paroi périphérique et fermé par un couvercle, ce dernier présentant au moins 2n ouvertures d'entrée reliées chacune, par des moyens de communication, avec un embranchement tubulaire, tandis que le fond comporte un nombre x supérieur à 1 de bouches d'évacuation définissant des troisièmes moyens de fractionnement de la pâte.

Conformément à une caractéristique préférentielle de l'invention, les moyens de communication mentionnés ci-dessus peuvent être conçus aptes à adopter selon le cas un état autorisant un écoulement de pâte depuis un embranchement tubulaire vers une ouverture d'entrée du bac ou un état interdisant ledit écoulement, le passage d'un état vers un autre étant contrôlé par un piston relié auxdits moyens de communication.

A cet effet, les moyens de communication peuvent comporter un passage reliant un embranchement tubulaire à une ouverture d'entrée du bac ainsi qu'un boisseau rotatif, logé dans ledit passage, et assujetti audit piston.

Par ailleurs, l'embranchement tubulaire, l'ouverture d'entrée et ledit passage peuvent être prévus d'axe parallèle à l'axe d'un conduit, tandis que le piston est logé dans un fourreau s'étendant perpendiculairement à l'axe d'un conduit et débouchant dans ledit passage.

Conformément à une autre caractéristique, les faces internes respectives dudit conduit et desdits embranchements tubulaires sont lisses.

Il a également été imaginé que lesdits embranchements tubulaires présentent chacun de préférence une allure d'entonnoir et comportent une entrée formant une cuvette prolongée par une sortie de forme cylindrique.

D'autre part, le conduit et les embranchements tubulaires peuvent, le cas échéant être fabriqués d'un seul tenant.

De manière optionnelle, les embranchements tubulaires peuvent également être portés par une pièce indépendante du conduit, partiellement emboîtée dans l'extrémité de sortie de ce dernier.

Une autre caractéristique de l'invention est définie par le fait que la trémie d'alimentation est compartimentée au moyen d'au moins une cloison amovible s'étendant perpendiculairement à son fond entre deux orifices consécutifs.

De plus, les bouches d'évacuation dudit bac peuvent avantageusement présenter chacune une forme d'entonnoir.

Afin de faciliter la maintenance du dispositif de dressage de l'installation selon l'invention, la paroi périphérique et le couvercle du bac peuvent être conçus de manière telle qu'ils forment ensemble une pièce dissociable dudit fond.

A cet effet, il peut être prévu que deux faces opposées de la paroi périphérique du bac et deux bords opposés du fond du bac définissent respectivement une coulisse et un rail, ou inversement, permettant un déplacement en translation du fond par rapport à ladite pièce formée par le couvercle et la paroi périphérique.

Une autre caractéristique de l'installation selon l'invention est définie par le fait que le tapis de convoyage est préférentiellement défini par une feuille de papier cuisson dont le déplacement le long de la ligne de production est assuré par une bobine d'enroulage disposée au niveau de la zone de sortie de ligne.

Dans ce cas, l'installation se caractérise également en ce qu'elle comporte des moyens conçus aptes à garantir un contact entre le papier cuisson et une sole de cuisson que comporte la zone de cuisson.

A cet effet, des moyens d'aspiration du papier cuisson, disposés sous la face inférieure de celui-ci, peuvent être prévus.

Plus précisément, des premiers moyens d'aspiration, s'étendant dans une première zone comprise entre la zone de dressage et la zone de cuisson et des seconds moyens d'aspiration s'étendant dans une seconde zone comprise entre la zone de cuisson et la zone de sortie de ligne, peuvent être prévus.

Par ailleurs, l'installation selon l'invention comporte également préférentiellement des moyens conçus aptes à provoquer une vibration du papier cuisson sur une certaine distance dans ladite première zone, immédiatement en aval de la zone de dressage.

En outre, l'installation peut être équipée de moyens de refroidissement des coques et/ou de moyens de décollage des coques du papier cuisson, disposés dans ladite seconde zone comprise entre la zone de cuisson et la zone de sortie de ligne.

De manière avantageuse, cette dernière peut par ailleurs comporter des moyens d'alignement des coques en rangées rectilignes.

L'invention sera mieux comprise, et d'autres caractéristiques et avantages de l'invention apparaîtront à la lumière de la description qui suit d'un exemple de réalisation de l'installation selon l'invention, donné à titre non limitatif.

La description est à lire en relation avec les dessins annexés dans lesquels :

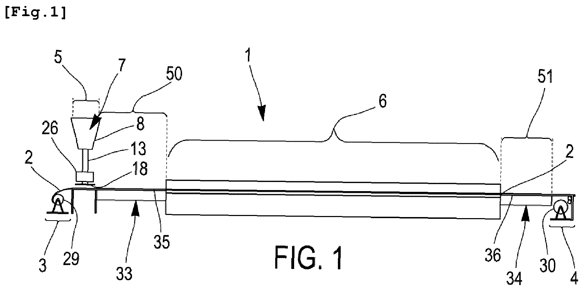

- La figure 1 est une vue schématique de l'installation selon l'invention,
- La figure 2 est une vue en perspective de dessous d'une variante de réalisation du dispositif de dressage que comporte l'installation de la figure 1,
- La figure 3 est une vue selon le plan de coupe BB du dispositif de dressage de la figure 2,
- Les figures 4 et 5 sont des vues respectivement de dessus et de dessous d'une pièce portant les embranchements tubulaires dont est équipé le dispositif de dressage de la figure 2,
- Les figures 6 et 7 sont des vues de dessus d'un bac constitutif du dispositif de dressage de la figure 2, dans lesquelles le couvercle et le fond sont respectivement associés et partiellement dissociés, et

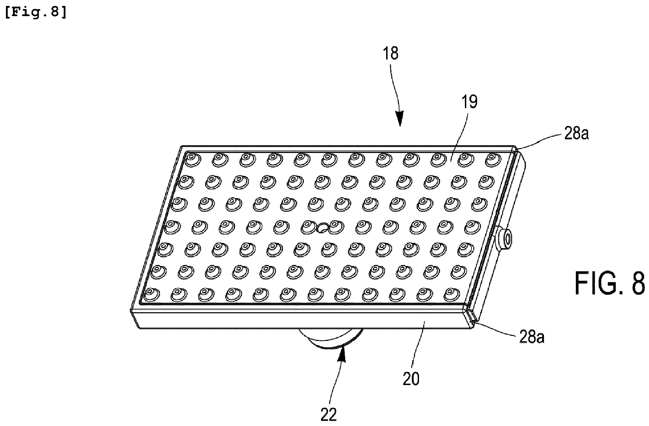

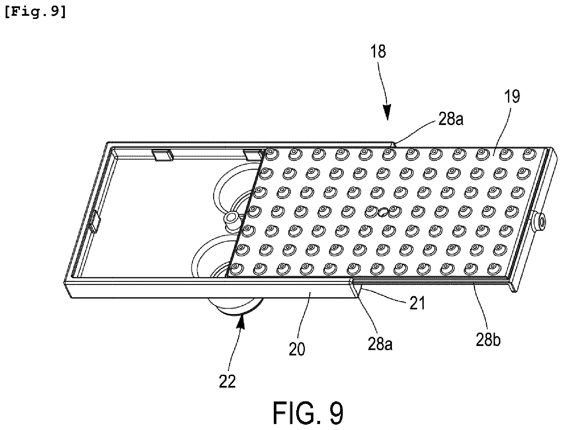

- - Les figures 8 et 9 sont des vues de dessous d'un bac constitutif du dispositif de dressage de la figure 2, dans lesquelles le couvercle et le fond sont respectivement associés et partiellement dissociés.

En référence aux figures, la présente invention concerne une installation 1 pour la fabrication de coques de macarons comprenant un tapis de convoyage 2 se déplaçant depuis une zone d'entrée de ligne 3 en direction d'une zone de sortie de ligne 4, et traversant une zone de dressage 5 et une zone de cuisson 6 des coques.

De manière classique, la zone de dressage 5 est équipée d'un dispositif de dressage 7 de la pâte, comportant une trémie d'alimentation 8 reliée, par des moyens de fractionnement de la pâte, à des moyens de dépôt de fractions de pâte sur le tapis de convoyage 2.

Dans la variante de réalisation illustrée, conformément à l'invention, les moyens de fractionnement comportent des premiers, seconds et troisièmes moyens de fractionnement qui seront décrits plus en détails ci-dessous.

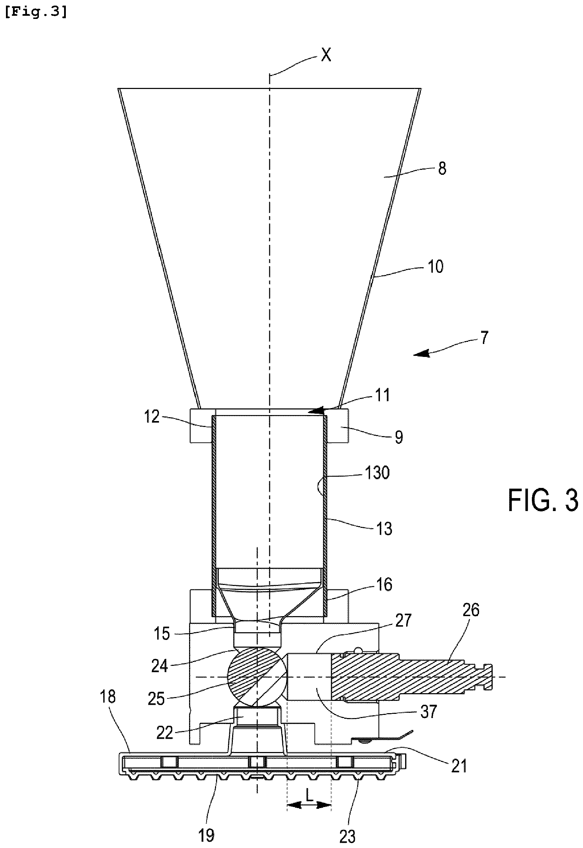

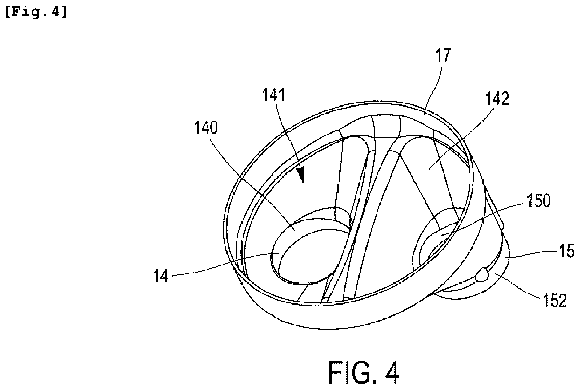

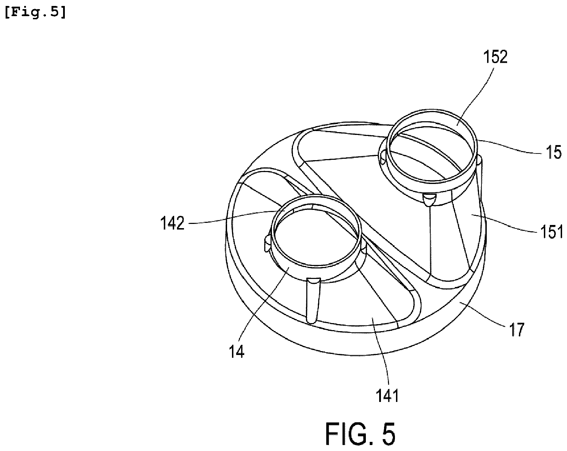

Tel qu'illustré aux figures 3 et 4, la trémie d'alimentation 8 présente un fond 9, d'allure horizontale, surmonté par une paroi périphérique 10 ménageant un réservoir de réception de la pâte destinée à la fabrication de coques de macarons. Dans la variante de réalisation illustrée, les premiers moyens de fractionnement du dispositif de dressage 7 comportent quatre orifices 11, formés dans le fond 9 de la trémie d'alimentation 8, et communiquant chacun avec l'extrémité d'entrée 12 d'un conduit 13 d'axe X, d'allure verticale, tandis que les seconds moyens de fractionnement comportent deux embranchements tubulaires 14, 15 (cf. fig. 4 et 5) communiquant chacun avec l'extrémité de sortie 16 du conduit 13. Plus précisément, dans la variante décrite, les embranchements tubulaires 14, 15 sont portés par une pièce 17, indépendante du conduit 13, et partiellement emboîtée dans l'extrémité de sortie 16 de ce dernier. Bien entendu, une structure dans laquelle les embranchement tubulaires 14, 15 seraient fabriqués d'un seul tenant avec le conduit 13 est également envisageable.

Il convient de noter que conformément à l'invention, dans la variante illustrée, la face interne 130 de chaque conduit 13 et les faces internes 140, 150, des embranchements tubulaires 14, 15 sont lisses, ce qui a pour effet de favoriser l'écoulement de pâte à macarons. De surcroît, cet effet est encore accentué grâce à la caractéristique selon laquelle les embranchements tubulaires 14, 15 présentent chacun une allure d'entonnoir et comportent une entrée formant une cuvette 141, 151 prolongée par une sortie de forme cylindrique 142, 152.

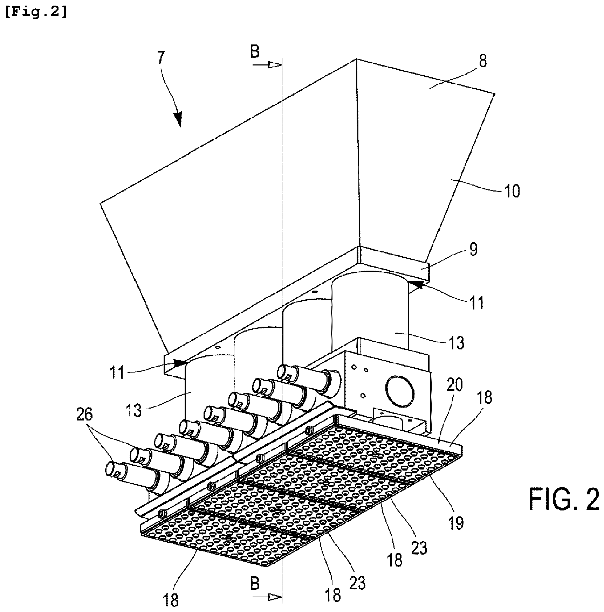

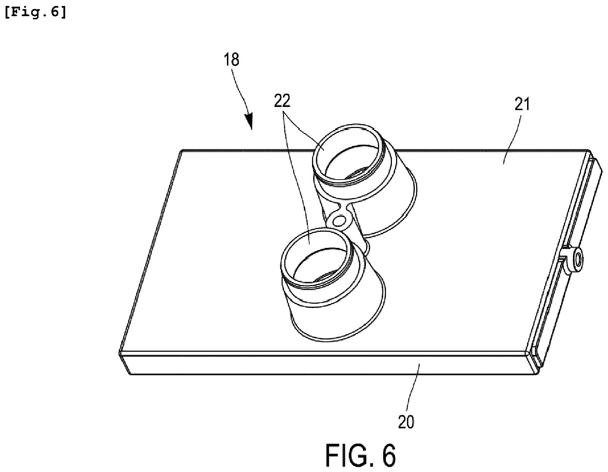

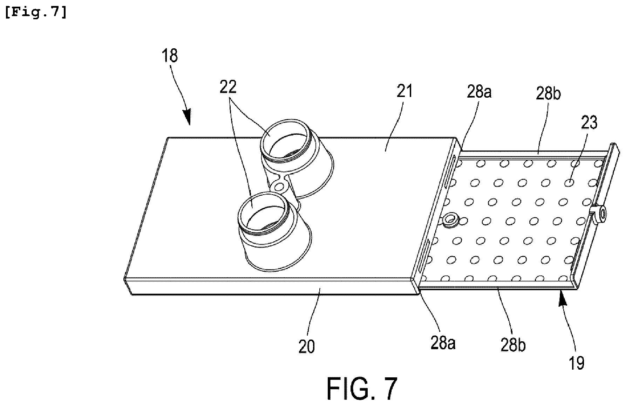

D'autre part, dans l'exemple de réalisation illustré, les moyens de dépôt de fractions de pâte comportent quatre bacs 18 identiques (cf. fig. 2, 3, et 6-7), délimités chacun par un fond 19, s'étendant parallèlement au fond 9 de la trémie d'alimentation 8, et comportant quatre-vingt-quatre bouches d'évacuation 23, définissant les troisièmes moyens de fractionnement de la pâte que comporte le dispositif de dressage 7. Avantageusement, les bouches d'évacuation 23 sont régulièrement réparties sur le fond 19 et présentent chacune une forme d'entonnoir contribuant à faciliter l'écoulement de pâte et par conséquent à déposer sur le tapis de convoyage 2 des fractions de pâte d'allures régulières. D'autre part, certaines bouches d'évacuation 23, par exemple celles disposées de manière centrale sur le fond 19, peuvent être prévues de diamètre différent (par exemple légèrement supérieur) de celui des bouches d'évacuation 23 disposées à proximité des bords du fond 19, ce qui permet de fabriquer simultanément des coques de tailles variables, adaptées à différentes applications.

Par ailleurs, le fond 19 de chaque bac 18 est surmonté par une paroi périphérique 20 et fermé par un couvercle 21 présentant deux ouvertures d'entrée 22. Ces dernières sont reliées chacune avec un embranchement tubulaire 14, 15, par un passage 24 (cf. fig. 3) dans lequel est logé un boisseau rotatif 25, assujetti à un piston 26. De fait, le boisseau rotatif 25 est configuré pour adopter, selon le cas, un état autorisant un écoulement de pâte depuis un embranchement tubulaire 14, 15 vers une ouverture d'entrée 22, via une chambre 37, ou un état interdisant ledit écoulement, le passage d'un état vers un autre étant contrôlé par un piston 26.

Il convient également de noter que les embranchements tubulaires 14, 15, les ouvertures d'entrée 22 et les deux passages 24 correspondants sont d'axe parallèle à l'axe X d'un conduit 19, tandis que chaque piston 26 est logé dans un fourreau 27, s'étendant perpendiculairement à l'axe X du conduit 19. Une partie de ce fourreau 27 forme la chambre 37 mentionnée ci-dessus. De manière classique, chaque piston 26 est configuré pour se déplacer dans son fourreau 27 entre une première et une seconde positions, d'une course correspondant à la longueur 1 de la chambre 37. Dans la première position (illustrée à la figure 3), le piston 26 est écarté du boisseau rotatif 25 de la distance correspondant à la longueur 1 de la chambre 37, une dépression est créée, du fait de l'étanchéité du boisseau rotatif 25 dans le passage 24, et la chambre 37 se remplit progressivement de pâte en provenance d'un embranchement 14, 15. Après une rotation de 90° du boisseau rotatif 25, la chambre 37 considérée est en communication avec la sortie 22, tandis que toute communication entre la chambre 37 et un embranchement tubulaire 14, 15 est empêchée. Le piston 26 peut alors se déplacer vers sa seconde position et avancer progressivement dans la chambre 37, pour expulser la pâte qui y est contenue vers l'orifice de sortie 22.

Grâce à la structure qui vient d'être décrite, le dispositif de dressage 7 selon l'invention permet avantageusement de déposer des fractions de pâte sur le tapis de convoyage 2, avec une très grande précision et une extrême régularité de résultats. Les avantages obtenus sont particulièrement vérifiés dans le cadre de la fabrication de macarons de très petites tailles, puisque le dispositif de dressage 7, permet, grâce à la multiplicité de moyens de fractionnement dont il est équipé, de fabriquer de manière industrielle des coques de diamètre inférieur à 15mm et de masse inférieure à 0,5g, ce qu'aucun dispositif de dressage classique ne permet d'obtenir. Les moyens de fractionnement permettent de répartir la pâte vers de nombreuses bouches d'évacuation 23 et de déposer à chaque fois, 336 fractions de pâte de forme régulière et conforme aux exigences de qualité attendues, sur le tapis de convoyage.

D'autre part, selon une caractéristique additionnelle prévue dans le cadre de l'invention, la paroi périphérique 20 et le couvercle 21 de chaque bac 18 forment ensemble une pièce dissociable du fond 19. A cet effet, deux faces opposées de la paroi périphérique 20 de chaque bac 18 et deux bords opposés du fond 19 du bac 18 définissent respectivement une coulisse 28 et un rail 29, permettant un déplacement en translation du fond 18 par rapport à la pièce formée par le couvercle 21 et la paroi périphérique 20. Une telle structure permet avantageusement un nettoyage aisé, et par conséquent minutieux, des éléments constitutifs de chaque bac 18.

En vue de permettre une fabrication simultanée de coques de couleurs différentes, nécessitant d'éviter un mélange des pâtes correspondantes, la trémie d'alimentation 8 peut être compartimentée au moyen d'une à trois cloisons amovibles (non illustrées) s'étendant perpendiculairement à son fond 9 entre deux orifices 11 consécutifs. Ainsi, l'utilisation d'une unique cloison amovible permet la fabrication simultanée de deux sortes de coques de couleurs différentes, tandis que la mise en œuvre de trois cloisons permet avantageusement la fabrication simultanée de quatre types de coques de couleurs différentes.

Dans le cadre de la présente invention, il a par ailleurs été imaginé de simplifier la structure de l'installation 1 tout en améliorant les conditions de fabrication des coques de macarons. A cet effet, le tapis de convoyage 2 est défini par une bande de papier cuisson faisant simultanément office de support pour les fractions de pâtes, tout au long de la ligne de production. En somme, le déplacement des fractions de pâtes, depuis la zone de dressage 5 jusqu'à la zone de sortie de ligne 4, est assuré par la bande de papier cuisson. Celle-ci alimente l'installation 1 en étant déroulée à partir d'une bobine d'alimentation 29 disposée au niveau de la zone d'entrée de ligne 3. Elle progresse le long de la ligne de production sous l'effet de son enroulement sur une bobine d'enroulement 30 disposée au niveau de la zone de sortie de ligne 5.

Des premiers moyens d'aspiration 31 s'étendant dans une première zone 50 comprise entre la zone de dressage 5 et la zone de cuisson 6 et des seconds moyens d'aspiration 32 s'étendant dans une seconde zone 32 comprise entre la zone de cuisson 6 et la zone de sortie de ligne 4 permettent en outre de garantir un contact entre le papier cuisson et une sole de cuisson que comporte la zone de cuisson 6.

Dans la variante de réalisation illustrée, les premiers et seconds moyens d'aspiration sont définis par une turbine (non illustrée) de fort débit mais de faible dépression, disposée dans chacune des zones 50, 51 situées en amont et en aval de la zone de cuisson 6, à l'intérieur de caissons 33, 34 dont la face supérieure 35, 36 est perforée. En fait, la mise en œuvre des moyens d'aspiration a pour effet non seulement de plaquer le papier cuisson contre la sole du tunnel de cuisson 6, mais également de le lisser dans la zone de dressage 5 et par conséquent d'éviter les plis qui immanquablement déformeraient les fractions de pâte avant leur cuisson.A la sortie de la zone de cuisson, la turbine placée dans le caisson 34, permet de maintenir le papier cuisson dans une position favorisant son enroulement sur la bobine d'enroulement 30 tout en évitant également la formation d'éventuels plis et ainsi faciliter la saisie des coques au niveau de la zone de sortie de ligne 4 par un manipulateur muni de ventouses.

Il convient de noter que l'installation 1 selon l'invention comporte en outre des moyens vibrants (non illustrés), s'étendant sur une certaine distance dans la zone 50, immédiatement en aval de la zone de dressage 7, et permettant d'aplanir et de mettre à dimension les fractions de pâtes, juste avant l'étape de croûtage, préalable à la cuisson.

Par ailleurs, des moyens de refroidissement ainsi que des moyens de décollage des coques du papier cuisson, tels que par exemple une tige métallique placée entre le papier cuisson et la sole de cuisson et permettant de relever brièvement le papier cuisson peuvent également équiper la seconde zone 51.

L'installation 1 selon l'invention peut en outre comporter des moyens d'alignement des coques en rangées rectilignes, disposés dans la zone de sortie de ligne 4, destinés à améliorer une éventuelle préhension par un robot pneumatique (par exemple pour les transférer vers un autre poste). A cet effet, un capteur optique (non illustré) peut être placé au-dessus de la ligne de production, dans la zone 51 et/ou la sortie de ligne 4, en vue de commander le déclenchement et le positionnement d'un moyen d'alignement des coques, tel que par exemple un peigne à plusieurs rangées de dents (non illustré), permettant d'aligner parfaitement les n rangées de coques à macarons fabriquées.

## Revendications

1. Installation (1) pour la fabrication de coques de macarons comprenant un tapis de convoyage (2) se déplaçant depuis une zone d'entrée de ligne (3) en direction d'une zone de sortie de ligne (4), et traversant une zone de dressage (5) et une zone de cuisson (6) des coques, la zone de dressage (5) étant équipée d'un dispositif de dressage (7) de la pâte comportant une trémie d'alimentation (8) reliée, par des moyens de fractionnement de la pâte, à des moyens de dépôt de fractions de pâte sur le tapis de convoyage (2), **caractérisée en ce que** lesdits moyens de fractionnement comportent au moins des premiers et des seconds moyens de fractionnement.

2. Installation (1) selon la revendication 1, **caractérisé en ce que** la trémie d'alimentation (8) présente un fond (9) surmonté par une paroi périphérique (10), et **en ce que** les premiers moyens de fractionnement comportent un nombre n supérieur à 1 d'orifices (11) formés dans ledit fond (9) et communiquant chacun avec l'extrémité d'entrée (12) d'un conduit (13) d'axe (X) perpendiculaire audit fond (9), tandis que lesdits seconds moyens de fractionnement comportent au moins deux embranchements tubulaires (14, 15) communiquant chacun avec l'extrémité de sortie (16) dudit conduit (13).

3. Installation (1) selon la revendication 2, **caractérisée en ce que** les moyens de dépôt de fractions de pâte comportent au moins un bac (18), délimité par un fond (19) s'étendant parallèlement au fond (9) de ladite trémie d'alimentation (8), surmonté par une paroi périphérique (20) et fermé par un couvercle (21) présentant au moins 2n ouvertures d'entrée (22) reliées chacune, par des moyens de communication, avec un embranchement tubulaire (14, 15), et **en ce que** le fond (19) comporte un nombre x supérieur à 1 de bouches d'évacuation (23) définissant des troisièmes moyens de fractionnement de la pâte.

4. Installation (1) selon la revendication 3, **caractérisée en ce que** les moyens de communication sont configurés pour adopter selon le cas un état autorisant un écoulement de pâte depuis un embranchement tubulaire (14, 15) vers une ouverture d'entrée (22) ou un état interdisant ledit écoulement, le passage d'un état vers un autre étant contrôlé par un piston (26) relié auxdits moyens de communication.

5. Installation (1) selon la revendication 4, **caractérisée en ce que** les moyens de communication comportent un passage (24) reliant un embranchement tubulaire (14, 15) à une ouverture d'entrée (22) ainsi qu'un boisseau rotatif (25), logé dans ledit passage (24), et assujetti audit piston (26).

6. Installation (1) selon la revendication 5, **caractérisée en ce que** l'embranchement tubulaire (14, 15), l'ouverture d'entrée (22) et ledit passage (24) sont d'axe parallèle à l'axe (X) d'un conduit (13), tandis que le piston (26) est logé dans un fourreau (27) s'étendant perpendiculairement à l'axe (X) d'un conduit (13) et débouchant dans ledit passage (24).

7. Installation (1) selon l'une quelconque des revendications 2 à 6, **caractérisé en ce que** la face interne (130) dudit conduit (13) et desdits embranchements tubulaires (14, 15) sont lisses.

8. Installation (1) selon l'une quelconque des revendications 2 à 7, **caractérisé en ce que** lesdits embranchements tubulaires (14, 15) présentent chacun une allure d'entonnoir et comportent une entrée formant une cuvette (141, 151) prolongée par une sortie de forme cylindrique (142, 152).

9. Installation (1) selon l'une quelconque des revendications 2 à 8, **caractérisé en ce que** le conduit (13) et les embranchements tubulaires (14, 15) sont fabriqués d'un seul tenant.

10. Installation (1) selon l'une quelconque des revendications précédentes, **caractérisée en ce que** les embranchements tubulaires (14, 15) sont portés par une pièce indépendante du conduit partiellement emboîtée dans l'extrémité de sortie (16) de ce dernier.

11. Installation (1) selon l'une quelconque des revendications précédentes, **caractérisée en ce que** la trémie d'alimentation (8) est compartimentée au moyen d'au moins une cloison amovible s'étendant perpendiculairement à son fond (9) entre deux orifices (11) consécutifs.

12. Installation (1) selon l'une quelconque des revendications 3 à 11, **caractérisée en ce que** les bouches d'évacuation (23) dudit bac (18) présentent chacune une forme d'entonnoir.

13. Installation (1) selon l'une quelconque des revendications 3 à 12, **caractérisée en ce que** la paroi périphérique (20) et le couvercle (21) du bac (18) forment ensemble une pièce dissociable dudit fond (19).

14. Installation (1) selon la revendication 13, **caractérisée en ce que** deux faces opposées de la paroi périphérique (20) du bac (18) et deux bords opposés du fond (19) du bac (18) définissent respectivement une coulisse (28a) et un rail (28b), ou inversement, permettant un déplacement en translation du fond (19) par rapport à ladite pièce formée par le couvercle (21) et la paroi périphérique (20).

15. Installation (1) selon l'une quelconque des revendications précédentes, **caractérisée en ce que** le tapis de convoyage (2) est défini par une feuille de papier cuisson dont le déplacement le long de la ligne de production est assuré par une bobine d'enroulement (30) disposée au niveau de la zone de sortie de ligne (4).

16. Installation (1) selon la revendication 15, **caractérisée en ce qu'**elle comporte des moyens conçus aptes à garantir un contact entre le papier cuisson et une sole de cuisson que comporte la zone de cuisson (6).

17. Installation (1) selon la revendication 16, **caractérisée en ce qu'**elle comporte des moyens d'aspiration du papier cuisson, disposés sous la face inférieure de celui-ci.

18. Installation (1) selon la revendication 17, **caractérisée en ce qu'**elle comporte des premiers moyens d'aspiration s'étendant dans une première zone (50) comprise entre la zone de dressage (5) et la zone de cuisson (6) et des seconds moyens d'aspiration s'étendant dans une seconde zone (51) comprise entre la zone de cuisson (6) et la zone de sortie de ligne (4).

19. Installation (1) selon la revendication 18, **caractérisée en ce qu'**elle comporte des moyens conçus aptes à provoquer une vibration du papier cuisson sur une certaine distance dans ladite première zone (50), immédiatement en aval de la zone de dressage (5).

20. Installation (1) selon l'une quelconque des revendications 18 et 19, **caractérisée en ce qu'**elle comporte des moyens de refroidissement des coques disposés dans la seconde zone (51) comprise entre la zone de cuisson (6) et la zone de sortie de ligne (4).

21. Installation (1) selon l'une quelconque des revendications 18 à 20, **caractérisée en ce qu'**elle comporte des moyens de décollage des coques du papier cuisson disposés dans ladite seconde zone (51).

22. Installation (1) selon l'une quelconque des revendications précédentes, **caractérisée en ce qu'**elle comporte des moyens d'alignement des coques en rangées rectilignes, disposés dans la zone de sortie de ligne (4).
